# FASCICULE DE BREVET EUROPEEN

(11) **EP 2 001 780 B1**
(45) Date de publication et mention de la délivrance du brevet: **30.06.2010**
(21) Numéro de dépôt: 07731240.3
(22) Date de dépôt: 03.04.2007
(51) Int. Cl.: B65G 57/06, B65G 57/24

(54) **TABLE DE DEPOSE POUR PALETTISEUR.**
HUBDECK FÜR PALETTIERVORRICHTUNG
LIFTING DECK FOR PALLET LOADER.

(30) Priorité: 04.04.2006 FR 0602926
(43) Date de publication de la demande: 17.12.2008
(73) Titulaire: Sidel Participations, 76930 Octeville Sur Mer (FR)
(72) Inventeur: GERMAIN, Dominique, F-76930 Octeville sur Mer (FR)
(74) Mandataire: Cabinet Plasseraud
(86) Numéro de dépôt international: PCT/FR2007/000562
(87) Numéro de publication internationale: WO 2007/118988

(56) Documents cités:
- WO-A-2006/000847
- US-A- 4 067 456
- US-A- 4 434 119

## Description

La présente invention concerne les installations de palettisation et en particulier, dans ces installations, une table de palettisation, c'est-à-dire la table qui permet de déposer les produits, sur une palette, selon le préambule de la revendication 1 et un palettiseur selon le préambule de la revendication 9.

Le processus de palettisation est la conclusion du processus de fabrication des produits et il fait entrer ces produits dans la chaîne commerciale.

Cette opération finale qui se déroule chez l'industriel fabricant est particulièrement importante et aussi très délicate ; les échecs à ce niveau ne sont pas tolérables compte tenu des conséquences.

En effet, un incident sur une palette peut endommager toute la palette et même les palettes voisines, au point de rendre impropre à la consommation l'ensemble des produits.

Des produits de toutes sortes sont palettisés en bout de leur chaîne de fabrication. Bien souvent ces produits sont disposés dans des emballages carton parallélépipédiques ; ils peuvent également, lorsqu'il s'agit de bouteilles, être rassemblés sous forme de packs.

Dans tous les cas, l'emballage ou le conditionnement doit être parfaitement positionné sur la palette pour ne pas risquer de tomber, par exemple, mais aussi pour recevoir et positionner correctement les autres emballages qui sont à côté ou au-dessus dans la couche supérieure.

Les produits arrivent au niveau de l'installation de palettisation par le biais d'un convoyeur, le plus souvent. Ils sont rassemblés et sont ordonnés sur une table de groupage pour constituer une couche, laquelle couche s'étend sur une surface qui correspond à celle de la palette.

Cette couche est ensuite déplacée et amenée sur la table de palettisation au moyen d'un poussoir et cette table se déplace pour positionner ladite couche au-dessus de la palette à charger.

La couche est ensuite centrée et ceinturée à la verticale de la palette avant d'être lâchée par la table qui s'escamote et elle se dépose, par simple gravité, sur ladite palette ou sur la couche déjà en place sur cette dernière.

Pour limiter la hauteur de chute des produits sur la palette ou sur la couche déjà en place, la table de palettisation doit avoir une épaisseur la plus faible possible.

La dimension de cette table en longueur et en largeur est sensiblement supérieure à celle de la palette et, compte tenu des charges qu'elle peut accueillir, de l'ordre de deux à trois cents kg, elle doit aussi être relativement rigide.

De plus, cette table de palettisation doit avoir des propriétés, en matière de glissement, qui permettent de recevoir et de libérer une couche de produits sans provoquer de désordre, c'est-à-dire que la couche de produits doit impérativement conserver sa forme et son intégrité telles qu'établies préalablement sur la table de groupage.

En effet, les produits sont positionnés sur la table de groupage selon un schéma de palettisation qui tient compte de leurs dimensions, pour remplir au mieux tout l'espace disponible sur la surface de la palette à charger.

Lors de leur transfert entre la table de groupage et la table de palettisation, les produits doivent conserver leur position qui correspond à ce schéma de palettisation.

La présente invention propose un aménagement original de cette table de palettisation escamotable qui permet d'en faire un accessoire de type universel, c'est-à-dire capable de s'adapter facilement à tous types de produits et/ou d'emballages à palettiser.

En effet, une installation de palettisation peut être utilisée pour différents types de produits et/ou d'emballages, dont les caractéristiques et en particulier les caractéristiques de stabilité mais aussi de glissement, peuvent varier dans des proportions importantes.

Aussi, il est utile, voire nécessaire, de pouvoir modifier, selon la nature des produits et/ou des emballages, les propriétés de la table de palettisation notamment en adaptant la surface de glissement de cette table c'est-à-dire la sole, à la nature de ces produits et/ou de ces emballages à palettiser.

Généralement, la sole de ce type de table est constituée d'un panneau en bois traité avec de la résine, formant une sorte de panneau du type « bakélite ». On obtient ainsi une sole relativement rigide, de faible épaisseur malgré tout, avec des propriétés, en matière de glissement, qui sont intéressantes.

Pour certains types de produits, comme les packs de bouteilles, les problèmes liés au glissement sont plus délicats à traiter et la sole « bakélite » peut provoquer des désordres et des incidents de palettisation qui ne sont pas acceptables comme le pivotement des packs.

Le document US 4 067 456 montre un palettiseur qui comporte une table selon le préambule de la revendication 1, ladite table est escamotable et susceptible d'accueillir une couche de produits, du type sacs de ciment, et de déposer ces sacs sur une palette.

Pour des produits classiques du genre sacs de ciment ou cartons d'emballage, les problèmes de stabilité sont pratiquement inexistants. Ce problème existe surtout pour des produits et/ou emballages du genre packs de bouteilles, c'est-à-dire des produits qui ont un fond dont la surface porteuse est relativement faible et qui, en plus, n'est pas homogène ni régulière.

Le document WO 2006/000 847 montre un palettiseur selon le préambule de la revendication 9.

La présente invention propose un aménagement de la table de palettisation escamotable qui permet de remédier aux difficultés rencontrées pour des produits et/ou emballages difficiles à guider, peu stables dans l'espace. Elle propose un aménagement qui offre en plus des possibilités nouvelles pour traiter ces questions de circulation des produits, et/ou emballages, sur la sole de cette table de palettisation

L'invention propose encore un aménagement qui convient quel que soit le type de table : aussi bien pour une table simple constituée d'un simple panneau formant trappe, comme décrit dans le document précité, que pour une table plus complexe constituée de deux trappes, du type à ouverture symétrique, comme décrit dans le document US 4 434 119.

La table de palettisation selon l'invention comprend les caractéristiques de la revendication 1.

Selon une autre disposition de l'invention, la traverse d'entrée de la table de palettisation est constituée d'une structure en forme de U à ailes dissymétriques qui sont disposées horizontalement, l'aile supérieure débordant légèrement au-dessus du niveau de la sole pour faire office de butée et de talon anti-recul.

Toujours selon l'invention, la traverse de sortie de la table de palettisation est constituée d'une structure en forme de plaque ou de profilé dont la nature et la dimension, prise dans le sens longitudinal de ladite table, sont choisies, d'une part, pour freiner et retenir les produits et/ou emballages lors de leur introduction sur ladite table et aussi, d'autre part, pour les positionner correctement lors de leur largage sur la palette.

Selon une autre disposition de l'invention, les organes tubulaires sont constitués d'un tube dont la longueur correspond au moins à celle de la palette, lequel tube comporte à chaque extrémité, un demi-arbre qui est équipé de moyens du genre roulement, susceptibles d'être enchâssés et immobilisés dans des logements qui sont aménagés dans une monture, laquelle monture est constituée de l'aile horizontale inférieure de la feuillure des longerons et d'au moins une pièce de verrouillage qui est parallèle à ladite aile, laquelle pièce, ou coque, est fixée audit longeron et elle est commune à plusieurs organes tubulaires, formant des groupes d'organes, chaque logement étant constitué de deux lumières superposées, l'une dans ladite aile horizontale de ladite feuillure et l'autre dans ladite patte, pour accueillir, notamment, la cage externe desdits moyens du genre roulement.

Toujours selon l'invention, les rouleaux comportent un roulement à chacune de leurs extrémités; l'un desdits roulements est immobilisé sur son demi-arbre et l'autre est libre axialement, et le demi-arbre du roulement libre axialement comporte un tourillon à son extrémité pour accueillir une roue libre de faible diamètre, laquelle roue libre comporte une cage extérieure qui est immobilisée dans la feuillure du longeron au moyen, par exemple, d'un carré, lequel carré est muni d'un orifice central qui lui permet d'être emmanché en force sur la cage extérieure de ladite roue libre.

Toujours selon l'invention, les organes tubulaires peuvent faire office de moyens de retenue pour freiner les objets lorsqu'ils arrivent à l'extrémité de la table, lesquels organes comportent, en lieu et place du roulement qui est immobilisé sur son demi-arbre, une simple bague monobloc aux dimensions identiques à celles dudit roulement, laquelle bague est serrée et immobilisée sur ledit demi-arbre, et elle est verrouillée dans le logement de la monture normalement affecté audit roulement.

Selon une autre disposition de l'invention, les coques de fixation des roulements, ou des bagues, sont constituées d'un simple plat qui est muni, du côté de l'aile verticale du longeron, de tenons qui s'insèrent dans des lumières aménagées dans ladite aile verticale, et qui est aussi muni d'orifices, de préférence carrés, pour le passage de vis d'assemblage du type à tête ronde qui comportent un carré sous ladite tête.

Toujours selon l'invention, les coques comportent des tenons en forme de Té qui coopèrent avec des lumières en forme de Té renversé aménagées dans l'aile verticale des longerons de façon à verrouiller automatiquement en position horizontale chaque coque de fixation par rapport à ladite aile verticale après son encliquetage dans cette dernière.

L'invention concerne également le palettiseur comportant les caractéristiques de la revendication 9.

Toujours selon l'invention, la petite trappe du palettiseur peut être aménagée comme la grande trappe, avec des rouleaux, sauf que ces rouleaux ne comportent pas de roue(s) libre(s).

Mais l'invention sera encore détaillée à l'aide de la description suivante et des dessins annexés donnés à titre indicatif et dans lesquels :
- la figure 1 montre, de façon schématique, les différents éléments constitutifs d'une installation de palettisation, et en particulier un palettiseur du type comportant une table de palettisation à ouverture symétrique ;
- la figure 2 montre une coupe transversale de la grande trappe de la table de palettisation, réalisée au niveau d'un organe tubulaire en forme de rouleau ;
- la figure 3 montre, en perspective, le coin droit de l'entrée de la grande trappe de la table de palettisation ;
- la figure 4 montre, en perspective également, le détail du montage particulier de la roue-libre pour autoriser la rotation du rouleau dans un sens et le verrouiller dans l'autre sens, de façon à l'utiliser aussi comme organe anti-recul pour les produits et/ou emballages, lors du déplacement de la table entre sa position d'accueil desdits produits et sa position permettant le largage de ces derniers au-dessus de la palette.

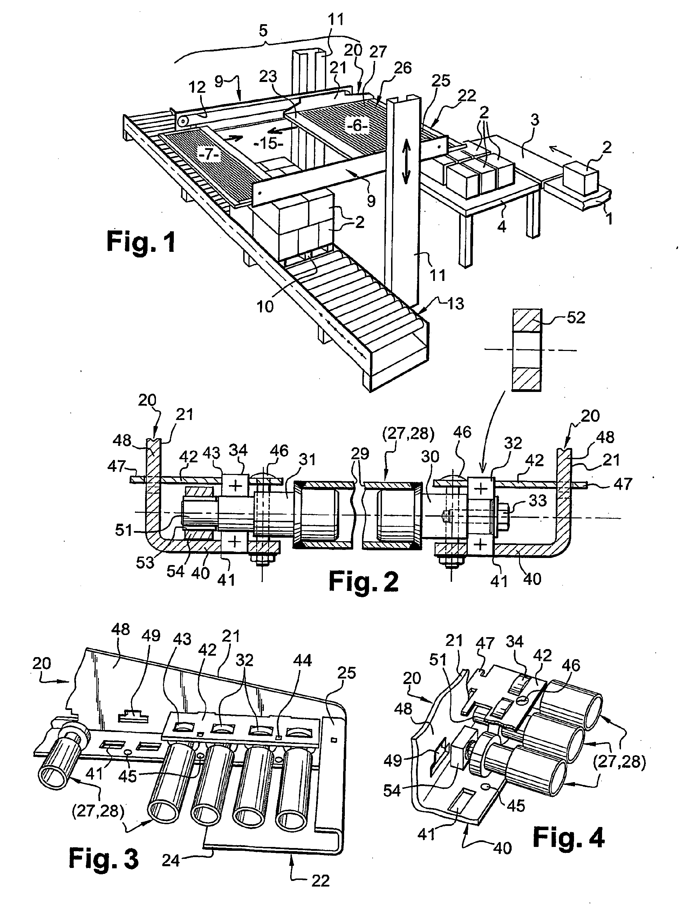

L'installation de palettisation représentée figure 1 comprend un convoyeur (1) d'amenée des produits (2), et/ou emballages, à palettiser, lesquels produits, du type packs de bouteilles, par exemple, sont présentés sous la forme de caisses parallélépipédiques.

Le convoyeur (1) transfère les produits (2) sur la table (3) du type à rouleaux, qui est une table de préparation desdits produits (2), c'est-à-dire une table ou les produits sont installés en long ou en travers selon des critères liés à leurs dimensions ainsi qu'à celles de la palette et, en particulier, au schéma de palettisation.

Des moyens de transfert, non représentés, poussent sur la table (4) de groupage les lignes de produits (2) qui ont été préparées sur la table (3) et, lorsque la couche de produits est prête, celle-ci est transférée par un poussoir, non représenté, sur la table (5) de palettisation.

Cette table (5) de palettisation, représentée de façon simplifiée sur la figure 1, est constituée de deux parties en forme de trappes, à ouverture symétrique ; elle comprend une grande trappe (6) et une petite trappe (7) dont la superficie correspond à la moitié de celle de ladite grande trappe (6).

Cette grande trappe (6) a elle-même une superficie qui correspond à celle de la table (4) de groupage, c'est-à-dire à la surface qu'occupe la couche à palettiser, laquelle surface correspond à la superficie de la palette qui va accueillir cette couche.

Les deux trappes seront dénommées, dans la suite du texte, tables avec les références (6), (7), selon qu'il s'agit de la grande ou de la petite trappe respectivement.

Ces tables (6) et (7) sont portées par un bâti (9) qui est mobile verticalement entre une position de prise en charge de la couche de produits (2), au niveau de la table (4) de groupage et des positions de dépose de cette couche sur la palette (10), lesdites positions étant adaptées au niveau de dépose.

Le bâti (9) est guidé sur des poutres (11) verticales, et il est manoeuvré par des moyens appropriés pour se déplacer verticalement.

Les deux tables (6) et (7) sont guidées elles aussi, sur le bâti (9) pour s'écarter ou se rapprocher simultanément au moyen d'un système d'entraînement par chaînes (12) qui est esquissé sur la figure 1.

Les deux tables (6) et (7) se rapprochent pour que la couche qui est disposée sur la grande table (6) puisse être transférée pour partie sur la petite table (7) au moyen d'un poussoir approprié, non représenté, installé sur le bâti (9), et elles s'écartent et s'escamotent ensuite, à la verticale de la palette (10), pour larguer ladite couche sur ladite palette (10).

Avant ce largage, la couche est ceinturée au moyen de presses, non représentées, qui forment une sorte de cadre de maintien et de guidage, durant tout le temps du largage, c'est-à-dire le temps de l'escamotage de la table de palettisation et en particulier de l'escamotage des deux tables (6) et (7), ouvrant la fenêtre (15) de largage.

La palette (10) se situe sous la fenêtre (15) qui est délimitée par les deux grands côtés du bâti (9) et les rebords internes en vis-à-vis des deux tables (6) et (7), qui forment les traverses aval desdites tables.

Cette palette (10) circule sur un convoyeur (13) où elle est déposée en attente d'être chargée, puis évacuée.

Le transfert de la couche de produits entre la table (4) de groupage et la table (5) de palettisation doit s'effectuer sans perturber la couche, c'est-à-dire en conservant la disposition et l'orientation des produits telles qu'établies au niveau de la table (3) de préparation dans un premier temps puis au niveau de la table (4) de groupage dans un deuxième temps.

Pour concilier les différentes exigences qui règnent au niveau de cette table (5) de palettisation, la structure faisant office de châssis pour les tables (6) et (7) et en particulier celle de la grande table (6), est constituée d'un cadre (20) aménagé pour faciliter l'installation d'une sole qui peut être en rapport avec le type de produits et/ou d'emballages à palettiser.

La table (6) est constituée de deux longerons (21) et de deux traverses : une traverse (22) amont située à l'entrée et une traverse (23) aval située à la sortie, au niveau de la zone de largage.

Les longerons (21) comportent des aménagements appropriés pour coopérer avec le bâti (9), du genre glissières, non représentées. Ces longerons (21) ont, comme représentés figures 1 à 4, et sur toute leur longueur, une section en équerre et forment une feuillure pour accueillir une sole adaptée aux types de produits (2) à palettiser.

La traverse (22) amont située à l'entrée de la table (6) de palettisation a une section en forme de U renversé dont les ailes ont des longueurs inégales. L'aile (24) inférieure est plus longue que l'aile (25) supérieure; cette aile (24) fait office de raidisseur alors que l'aile (25) supérieure, plus courte, fait office de surface de glissement à l'entrée de la table (6).

La traverse (23) aval située à la sortie de la table (6) se présente sous la forme d'une plaque ou d'un profilé dont la dimension, dans le sens longitudinal de ladite table (6), est choisie de façon à servir de frein et d'arrêt pour les produits lorsque la couche complète est transférée depuis la table (4) de groupage.

L'épaisseur de cette traverse (23) est relativement faible pour limiter la hauteur de la chute des produits à palettiser, lors de leur largage sur la palette (10).

Entre les deux traverses (22) et (23) on trouve la sole (26) proprement dite; cette sole (26) a une épaisseur qui est la plus faible possible, de l'ordre de 3 cm environ, comme la traverse (23) aval.

L'aile (25) supérieure de la traverse (22) amont se situe à un niveau qui se situe sensiblement au-dessus du niveau de celui de la sole (26). Cette aile (25) fait office de butée et d'anti-retour pour les produits lorsque la table (6) est mise en mouvement pour amener lesdits produits au-dessus de la zone de largage.

La sole (26) est constituée d'organes (27) tubulaires de faible diamètre, en forme de rouleaux (28), comme détaillés figure 2 notamment.

La surface supérieure de la traverse (23) et le plan de circulation sur les rouleaux (28) sont au même niveau alors que, comme indiqué précédemment, l'aile (25) supérieure de la traverse (22) amont se situe légèrement au-dessus de ce niveau pour faire office de butée et de talon anti-retour.

Comme détaillés figure 2, les rouleaux (28) sont constitués d'un tube (29) dont le diamètre externe est de l'ordre de 30 mm et dont la longueur correspond sensiblement à celle de la palette (10) ; cette longueur est de l'ordre de 1,2 m environ. Ces rouleaux (28) sont très rapprochés, presque à touche touche pour offrir une bonne résistance compte tenu de la charge.

Le tube (29) est un tube rigide, du type étiré à froid, sans soudure, d'un diamètre de 30 mm avec une épaisseur de 3 mm. Il comporte, à chacune de ses extrémités, un demi-arbre (30), (31), qui est soudé.

Le demi-arbre (30) comporte un roulement (32) qui est immobilisé axialement au moyen d'une vis (33) alors que le demi-arbre (31) comporte un roulement (34) qui est monté libre axialement.

L'aile (40) horizontale, située à la partie inférieure des longerons (21), comporte des découpes (41) qui apparaissent sur les figures 2 à 4 ; ces découpes (41) permettent de loger les roulements (32) et (34) et en particulier de caler une portion de la partie inférieure de la cage extérieure desdits roulements ; cette position des roulements (32) et (34) sur l'aile (40) de la feuillure des longerons (21) permet de placer les rouleaux (28) le plus bas possible par rapport à la partie inférieure desdits longerons (21), pratiquement au même niveau, ce qui réduit, d'une manière générale, l'épaisseur de la table (6) de palettisation.

L'aile (40) des longerons (21) constitue la partie inférieure de la monture qui permet de fixer les roulements (32) et (34). Cette monture comprend, de chaque côté de la table (6), à l'extrémité des rouleaux (28), une pièce (42) qui se situe au-dessus de l'extrémité des demi-arbres (30), (31), et qui est parallèle à l'aile (40) de chaque longeron (21). Cette pièce (42) forme une sorte de coque qui coiffe la partie supérieure des roulements (32) et (34). Elle comporte des découpes (43) qui sont identiques aux découpes (41) de l'aile (40).

Ces découpes (41) et (43) sont disposées en vis-à-vis verticalement et elles forment un véritable logement pour chaque roulement (32), (34).

Les pièces ou coques (42) sont découpées dans de la tôle ayant une épaisseur de l'ordre de 3 mm ; leur longueur est limitée pour coopérer avec, par exemple, quatre roulements. Cette particularité permet de faciliter le montage des rouleaux (28) et aussi d'accéder de façon commode à ces rouleaux (28) pour intervenir en cas de besoin.

Chaque coque (42) comporte donc quatre découpes (43) ; elles comportent aussi deux orifices (44) qui se situent au-dessus et en vis-à-vis des orifices (45) de l'aile (40), pour le passage de vis (46). Ces vis (46) sont situées entre chaque couple de rouleaux (28) ; elles ont, par exemple, une tête ronde surmontant un carré qui permet de les bloquer dans l'orifice (44) de forme équivalente situé sur chaque coque (42).

Ces coques (42) comportent des pattes (47) en forme de Té qui permettent leur accrochage sur l'aile (48) verticale des longerons (21). Ces ailes (48) comportent des découpes (49) en forme de Té renversé qui accueillent les pattes (47) des coques (42). Les pattes (47) et les découpes (49) sont conformées et disposées de façon à placer les coques (42) parallèlement à-l'aile (40) inférieure des longerons (21).

Les rouleaux (28) n'occupent pas forcément toute la surface de la sole (26) ; ils peuvent être remplacés par ce qui est appelé d'une manière générale les organes (27) tubulaires dont la fonction, en dehors du fait qu'ils constituent également la sole (26) peut être de servir de frein pour ralentir, voire arrêter, les produits lorsqu'ils sont introduits sur la table (6) de palettisation.

La figure 2 montre aussi la possibilité de remplacer le roulement (32) par une simple bague (52) pour disposer d'un organe (27) tubulaire fixe qui peut faire office de frein pour les produits qui passent.

Cette bague (52) est monobloc, de même dimension que le roulement (32) dont elle prend la place. Elle est immobilisée sur le demi-arbre (30) par la vis (33) et elle est verrouillée, par serrage, dans la monture constituée par l'aile (40) et la coque (42), et en particulier dans leurs découpes respectives (41) et (43).

Les rouleaux (28) peuvent aussi comporter, comme représentés figure 2 et 4, des aménagements au niveau du demi-arbre (31) qui leur permettent de se comporter comme des anti-retours.

Ils peuvent comporter, à l'extrémité des demi-arbres (31), des tourillons (51) susceptibles d'accueillir des roues libres (53) dont le rôle est d'autoriser la rotation des rouleaux (28) dans un sens et de les bloquer dans l'autre sens ; cette particularité permet auxdits rouleaux (28) ainsi équipés de retenir les produits (2) qui sont sur la table (6) lorsque ladite table (6) est mise en mouvement pour placer lesdits produits (2) en position de largage au-dessus de la palette (10).

La roue libre (53) se présente sous la forme d'une bague de faible épaisseur dont la cage extérieure est emmanchée en force dans l'orifice central d'un carré faisant office de cale (54). Cette cale (54) se positionne dans la monture constituée par l'aile (40) inférieure du longeron (21) et par la coque (42), entre ladite aile (40) et ladite coque (42).

Figure 4, l'un des organes (27) tubulaires faisant office de rouleau comporte une roue libre (53) qui coopère avec une cale (54). Ces rouleaux (28) équipés de roues libres (53) se situent sur tout ou partie de la sole (26) à partir de la traverse (22).

La table (6) et la table (7) peuvent être aménagées de la même façon mais les rouleaux (28) à roue libre (53) sont destinés à la table (6).

## Revendications

1. Table de palettisation pour déposer une couche de produits (2) sur une palette (10), laquelle table est constituée d'une sole (26) de faible épaisseur portée par un cadre délimité par des traverses (22) et (23) de faible épaisseur également et par des longerons (21),
lesdits longerons (21) ont une section en forme d'équerre dont l'aile (40) horizontale au moins de la feuillure est aménagée pour accueillir et permettre le verrouillage d'un équipement formant ladite sole (26) et qui est adapté à la nature desdits produits (2) constituant la couche à palettiser, lequel équipement se présente sous la forme d'organes (27) tubulaires de faible diamètre, de l'ordre de 30 mm, disposés entre et parallèlement auxdites traverses (22), (23), lesdits organes (27) étant susceptibles de constituer des rouleaux (28), **caractérisée en ce que** en tout ou partie, sont montés sur roue libre (53).

2. Table de palettisation selon la revendication 1, **caractérisée en ce que** la traverse (22) d'entrée est constituée d'une structure en forme de U à ailes dissymétriques, qui sont disposées horizontalement, l'aile supérieure (25) débordant légèrement au-dessus du niveau de la surface de la sole (26) pour faire office de butée et de talon anti-recul.

3. Table de palettisation selon l'une quelconque des revendications 1 ou 2, **caractérisée en ce que** la traverse (23) de sortie est constituée d'une plaque dont la nature et la dimension longitudinale sont choisies, d'une part, pour freiner et retenir les produits (2) lors de leur introduction et aussi, d'autre part, pour les positionner correctement avant leur largage sur la palette (10).

4. Table de palettisation selon l'une quelconque des revendications 1 à 3, **caractérisée en ce que** les organes (27) tubulaires sont constitués d'un tube (29) dont la longueur correspond au moins à celle de la palette (10), lequel tube (29) comporte, à chaque extrémité, un demi-arbre (30), (31), qui est équipé de moyens du genre roulement (32), (34), susceptibles d'être enchâssés et immobilisés dans des logements qui sont aménagés dans une monture, laquelle monture est constituée de l'aile (40) horizontale inférieure de la feuillure des longerons (21) et d'au moins une coque (42) de verrouillage qui est fixée audit longeron (21) correspondant et qui est commune à plusieurs organes (27) tubulaires, formant des groupes d'organes, chaque logement étant constitué de deux découpes (41), (43) superposées, l'une étant disposée dans ladite aile (40) et l'autre dans ladite coque (42), pour accueillir, notamment, la cage externe des roulements (32), (34).

5. Table de palettisation selon la revendication 4, **caractérisée en ce que** les rouleaux (28) comportent un roulement (32), (34) à chacune de leurs extrémités, l'un desdits roulements étant immobilisé sur son demi-arbre (30) et l'autre étant libre axialement sur son demi-arbre (31), et le demi-arbre (31) comporte, à son extrémité, un tourillon (51) aménagé pour accueillir une roue libre (53) de faible diamètre, laquelle roue libre (53) comporte une cage extérieure qui est immobilisée dans la monture des roulements (34) au moyen, par exemple, d'une cale (54) qui est emmanché en force sur la cage extérieure de ladite roue libre (53).

6. Table de palettisation selon l'une quelconque des revendications 4 ou 5, **caractérisée en ce que** les organes (27) tubulaires peuvent faire office de moyens de retenue pour freiner les produits (2), lesquels organes (27) comportent, en lieu et place du roulement (32) qui est immobilisé sur son demi-arbre (30), une simple bague (52) qui est serrée et immobilisée sur ledit demi-arbre (30), laquelle bague (52) est verrouillée dans le logement de la monture normalement affecté audit roulement (32).

7. Table de palettisation selon l'une quelconque des revendications 4. à 6, **caractérisée en ce que** les coques (42) de fixation des roulements (32), (34) ou bagues (52) sont constituées d'une simple plaque munie, du côté de l'aile (48) verticale du longeron, de tenons (47) qui s'insèrent dans des découpes (49) aménagées dans ladite aile (48) verticale, et munies d'orifices (44), de préférence carrés, pour le passage de vis (46) du type à tête ronde avec un carré sous ladite tête.

8. Table de palettisation selon la revendication 7, **caractérisée en ce que** les coques (42) comportent des tenons (47) en forme de Té qui coopèrent avec des découpes (49) en forme de Té renversé, aménagées dans l'aile (48) verticale des longerons (21) de façon à verrouiller automatiquement chaque coque (42) par rapport à ladite aile (48) après son encliquetage.

9. Palettiseur comportant une table (5) en forme de trappe à ouverture symétrique pour la dépose sur une palette (10) et en couches successives, de produits (2) et/ou d'emballages divers, laquelle trappe est constituée de deux parties qui sont guidées dans un cadre qui est lui-même mobile verticalement, et ces deux parties sont mobiles symétriquement l'une par rapport à l'autre de part et d'autre du plan vertical de symétrie de ladite palette (10), pour larguer chaque couche de produits sur cette dernière, **caractérisée en ce que** l'une des parties, dénommée la grande table (6), ayant une superficie au moins égale à l'encombrement de la couche de produits (2) à palettiser, l'autre partie, dénommée la petite table (7), ayant une superficie de l'ordre-de la moitié de celle de ladite table (6) pour accueillir avant la dépose, ladite grande table (6) étant constituée d'une table selon l'une des revendications 1 à 8.

10. Palettiseur selon la revendication 9, **caractérisé en ce qu'**il comporte une petite table (7) aménagée comme la grande table (6), avec des rouleaux (28), sauf que ces rouleaux (28) ne comportent pas de roue libre (53).

## Claims

1. Palletization deck for placing a layer of products (2) onto a pallet (10), which deck is constituted by a base (26) of small thickness which is carried on a frame delimited by crosspieces (22) and (23) also of small thickness and by side pieces (21),
**characterized in that** said side pieces (21) have a square-shaped section the horizontal wing (40) of which at least of the rebate is arranged to receive and allow the locking of a piece of equipment forming said base (26) and which is adapted to the nature of the products (2) constituting the layer to be palletized, which piece of equipment is in the form of tubular components (27) of small diameter, of the order of 30 mm, arranged between and parallel to said crosspieces (22), (23), said components (27) being able to constitute rollers (28) which, in all or part, are mounted on free wheels (53).

2. Palletization deck according to claim 1, **characterized in that** the entry crosspiece (22) is constituted by a U-shaped structure with asymmetrical wings which are arranged horizontally, the upper wing (25) projecting slightly above the level of the base (26) in order to act as a stop and non-return heel piece.

3. Palletization deck according to any one of claims 1 or 2, **characterized in that** the exit crosspiece (23) is constituted by a sheet the nature and the longitudinal dimension of which are chosen, on the one hand to brake and retain the products (2) during their introduction and also, on the other hand, to position them correctly before their release onto the pallet (10).

4. Palletization deck according to any one of the claims 1 to 3, **characterized in that** the tubular components (27) are constituted by a tube (29) the length of which corresponds at least to that of the pallet (10), which tube (29) comprises, at each end, a half-shaft (30), (31), which is fitted with means of the bearing type (32), (34), able to be set and immobilized in housings which are created in a mounting, which mounting is constituted by the lower horizontal wing (40) of the rebate of the side pieces (21) and at least one locking shell (42) which is fixed to said corresponding side piece (21) and which is common to several tubular components (27), forming groups of components, each housing being constituted by two superimposed slots (41), (43), one being arranged in said wing (40) and the other in said locking shell (42), to receive, in particular, the outer cage of bearings (32), (34).

5. Palletization deck according to claim 4, **characterized in that** the rollers (28) comprise a bearing (32), (34) at each of their ends, one of said bearings being immobilized on its half-shaft (30) and the other being axially free on its half-shaft (31), and the half-shaft (31) comprises a journal (51) at its end arranged to receive a free wheel (53) of small diameter, which free wheel (53) comprises an outer cage which is immobilized in the mounting of the bearings (34) by means, for example, of a wedge (54) which is force-fitted onto the outer cage of said free wheel (53).

6. Palletization deck according to any one of claims 4 or 5, **characterized in that** the tubular components (27) act as retention means to brake the products (2), which components (27) comprise, instead and in place of the bearing (32) which is immobilized on its half-shaft (30), a simple ring (52) which is clamped and immobilized on said half-shaft (30), which ring (52) is locked in the housing of the mounting normally allocated to said bearing (32).

7. Palletization deck according to any one of claims 4 to 6, **characterized in that** the locking shells (42) of the bearings (32), (34) or rings (52) are constituted by a simple plate provided, on the side of the vertical wing (48) of the side piece, with tabs (47) which fit into cut-outs (49) created in said vertical wing (48), and fitted with orifices (44), preferably square, for the passage of machine screws (46) of round-head type with a square under said head.

8. Palletization deck according to claim 7, **characterized in that** the locking shells (42) comprise tabs (47) in the form of a T-piece which cooperate with cut-outs (49) in the form of an inverted T-piece, created in the vertical wing (48) of the side pieces (21) so as to automatically lock each shell (42) relative to said vertical wing (48) after it engages therein.

9. Palletizer comprising a deck (5) in the form of a trap door with symmetrical opening for the placing onto a pallet (10) and in successive layers, of various products (2) and/or packages, which trap door is constituted by two parts which are guided in a frame which is itself vertically mobile, and these two parts are symmetrically mobile relative to each other on either side of the vertical plane of symmetry of said pallet (10), so as to release each layer of products onto the latter, **characterized in that** one of the parts, called the large deck (6), having a surface area at least equal to the space occupied by the layer of products (2) to be palletized, the other part, called the small deck (7), having a surface area of the order of half that of said deck (6) for receiving before placement, said large deck (6) being constituted by a deck according to one of claims 1 to 8.

10. Palletizer according to claim 9, **characterized in that** it comprises a small deck (7) arranged like the large deck (6), with rollers (28), except that these rollers (28) do not comprise free wheels (53).

## Patentansprüche

1. Palettiertisch zum Ablegen einer Lage von Produkten (2) auf einer Palette (10), wobei der Tisch aus einer Auflageplatte (26) mit einer geringen Stärke gebildet ist, die von einem Rahmen gehalten wird, der von den Querträgern (22) und (23) von ebenfalls geringer Stärke und den Längsträgern (21) begrenzt wird, **dadurch gekennzeichnet**, wobei die Längsträger (21) einen Querschnitt in der Gestalt eines Winkels aufweisen, wobei mindestens der horizontale Schenkel (40) des Anschlags eingerichtet ist, dass er eine Vorrichtung, die die Auflageplatte (26) bildet, aufnimmt und deren Arretierung ermöglicht, und die an die Beschaffenheit der die zu palettierende Lage darstellenden Produkte (2) angepasst ist, wobei die Vorrichtung in Form von röhrenförmigen Elementen (27) mit einem geringen Durchmesser in der Größenordnung von 30 mm vorliegt, die zwischen und parallel zu den Querträgern (22), (23) angeordnet sind, wobei die Elemente (27) Rollen (28) bilden können, die ganz oder teilweise auf einem Freilauf (53) montiert sind.

2. Palettiertisch nach Anspruch 1, **dadurch gekennzeichnet, dass** der Zuführungsquerträger (22) aus einer U-förmigen Struktur mit asymmetrischen Schenkeln gebildet ist, die horizontal angeordnet sind, wobei der obere Schenkel (25) etwas über die Höhe der Oberfläche der Auflageplatte (26) hinausgeht, um als Anschlag und Bund mit Rücklaufschutz zu dienen.

3. Palettiertisch nach einem der Ansprüche 1 oder 2, **dadurch gekennzeichnet, dass** der Abgabequerträger (23) aus einer Platte gebildet ist, deren Beschaffenheit und Längsabmessung derart gewählt sind, dass sie die Produkte (2) einerseits beim Zuführen abbremst und hält, und dass sie sie andererseits vor dem Absetzen auf der Palette (10) auch richtig positioniert.

4. Palettiertisch nach einem der Ansprüche 1 bis 3, **dadurch gekennzeichnet, dass** die röhrenförmigen Elemente (27) aus einem Rohr (29) gebildet sind, dessen Länge mindestens der der Palette (10) entspricht, wobei das Rohr (29) an jedem Ende eine Steckachse (30), (31) aufweist, die mit Wälzlagermitteln (32), (34) versehen ist, die in in einer Fassung angeordneten Aufnahmen eingepasst und festgestellt werden können, wobei die Fassung aus dem unteren horizontalen Schenkel (40) des Anschlags der Längsträger (21) und aus mindestens einer Arretierabdeckung (42) gebildet ist, die an dem entsprechenden Längsträger (21) befestigt ist und die mehreren röhrenförmigen Elementen (27) gemein ist, wodurch Elementgruppen entstehen, wobei jede Aufnahme aus zwei übereinanderliegenden Ausschnitten (41), (43) gebildet ist, von denen der eine in dem Schenkel (40) angeordnet ist und der andere in der Abdeckung (42), um insbesondere den äußeren Käfig der Wälzlager (32), (34) aufzunehmen.

5. Palettiertisch nach Anspruch 4, **dadurch gekennzeichnet, dass** die Rollen (28) an jedem ihrer Enden ein Wälzlager (32), (34) aufweisen, von denen das eine der Wälzlager auf ihrer Steckachse (30) festgestellt ist und das andere axial frei auf ihrer Steckachse (31) beweglich ist, und die Steckachse (31) an ihrem Ende einen Zapfen (51) aufweist, der einen Freilauf (53) mit einem geringen Durchmesser aufnehmen kann, wobei der Freilauf (53) einen äußeren Käfig aufweist, der in der Fassung der Wälzlager (34) mittels beispielsweise eines Passstücks (54) festgelegt ist, das mit Kraft auf den äußeren Käfig des Freilaufs (53) aufgepresst ist.

6. Palettiertisch nach einem der Ansprüche 4 oder 5, **dadurch gekennzeichnet, dass** die röhrenförmigen Elemente (27) als Haltemittel zum Abbremsen der Produkte (2) dienen können, wobei die Elemente (27) anstelle des auf seiner Steckachse (30) festgelegen Wälzlagers (32), einen einfachen Ring (52) aufweisen, der auf dieser Steckachse (30) aufgezogen und festgelegt ist, wobei der Ring (52) in der Aufnahme der normalerweise für das Wälzlager (32) verwendeten Fassung arretiert ist.

7. Palettiertisch nach einem der Ansprüche 4 bis 6, **dadurch gekennzeichnet, dass** die Abdeckungen (42) zur Befestigung der Wälzlager (32), (34) oder der Ringe (52) aus einer einfachen Platte gebildet sind, die auf der Seite des vertikalen Schenkels (48) des Längsträgers mit Zapfen (47) versehen ist, die sich in die in dem vertikalen Schenkel (48) angeordneten Ausschnitte (49) einfügen und mit vorzugsweise quadratischen Öffnungen (44) zum Hindurchführen von Rundkopfschrauben (46) mit einem Vierkant unter dem Kopf versehen sind.

8. Palettiertisch nach Anspruch 7, **dadurch gekennzeichnet, dass** die Abdeckungen (42) T-förmige Zapfen (47) aufweisen, die mit den Ausschnitten (49) mit umgekehrter T-Form zusammenwirken, die in dem vertikalen Schenkel (48) der Längsträger (21) angeordnet sind, um jede Abdeckung (42) nach ihrem Einrasten gegenüber dem Schenkel (48) automatisch zu arretieren.

9. Palettierer, der einen Tisch (5) in Form eines sich symmetrisch öffnenden Lukendeckels zum Ablegen von verschiedenen Produkten (2) und/oder Packungen auf einer Palette (10) und in aufeinanderfolgenden Lagen aufweist, wobei der Lukendeckel aus zwei Bestandteilen gebildet ist, die in einem selbst vertikal beweglichen Rahmen geführt sind und diese beiden Bestandteile symmetrisch zueinander auf beiden Seiten der vertikalen Symmetrieebene der Palette (10) beweglich sind, um jede Lage von Produkten auf der letzten Lage abzusetzen,
**dadurch gekennzeichnet, dass** der Flächeninhalt von einem der Bestandteile mit der Bezeichnung großer Tisch (6) mindestens dem Platzbedarf der Lage der zu palettierenden Produkte (2) entspricht, und der Flächeninhalt des anderen Bestandteils mit der Bezeichnung kleiner Tisch (7) in der Größenordnung der Hälfte des Flächeninhalts des Tisches (6) beträgt, um den aus einem Tisch nach einem der Ansprüche 1 bis 8 gebildeten großen Tisch (6) vor dem Absetzen aufzunehmen.

10. Palettierer nach Anspruch 9, **dadurch gekennzeichnet, dass** er einen kleinen Tisch (7) aufweist, der wie der große Tisch (6) mit Rollen (28) versehen ist, außer dass diese Rollen (28) keinen Freilauf (53) aufweisen.
